# EUROPEAN PATENT SPECIFICATION

(11) **EP 1 288 458 B1**
(45) Date of publication and mention of the grant of the patent: **13.04.2005**
(21) Application number: 02014212.1
(22) Date of filing: 26.06.2002
(51) Int. Cl.: F01N 3/28, B01F 5/06, F01N 3/00

(54) **Method for distribution of gas, gas distributing device and silencer-catalyst system**
Verfahren zur Verteilung von Gas, Gasverteilungsvorrichtung und Schalldämpferkatalysatorsystem
Méthode pour la distribution d'un gaz, dispositif de distribution d'un gaz et système de silencieux catalytique

(30) Priority: 01.09.2001 DK 200101290
(43) Date of publication of application: 05.03.2003
(73) Proprietor: Haldor Topsoe A/S, 2800 Kgs. Lyngby (DK)
(72) Inventor: Holm-Christensen, Olav, 1453 Copenhagen (DK)
(74) Representative: Grünecker, Kinkeldey, Stockmair & Schwanhäusser Anwaltssozietät

(56) References cited:
- FR-A- 2 226 865
- JP-A- 8 312 339
- US-A- 4 054 418
- US-A- 4 182 120

## Description

The invention concerns a process and device for the distribution of a gas using a gas distributing device. More particularly, the invention relates to the distribution of a fast-flowing gas through a distributing device resulting in low pressure drop and a good gas distribution.

Gas distribution is important in many applications and a particularly important field is the treatment of exhaust gases from combustion systems.

Within the European truck industry, it is a criterion that the exhaust gases from internal combustion engines enter the applied silencer-catalyst system tangentially. This is important since the lack of space demands that the required systems are as small as possible. However, this leads to constraints on the gas distribution, and this affects the pressure drop and the flow distribution of the exhaust gas stream.

A homogeneous flow distribution is easily attainable provided the availability of pressure drop. However, in the case of the catalyst-silencer unit mentioned above, both a homogeneous flow profile and a reduced pressure loss is required.

Various distribution devices have been described in the patent literature. EP patent application No. 1022048 discloses a device for ensuring even distribution and homogeneity during mixing of a reducing agent with exhaust gases in the exhaust pipe of an internal combustion engine. This is achieved by means of fixed vanes generating swirling gas motion within the exhaust pipe, and this motion counteracts the force of gravity on the flow profile.

US patent No. 5723041 describes a process for promoting annularly uniform flow in a reaction space of a mixed phase reactor. Uniform flow is achieved by transferring the feed fluid into a device consisting of an external housing with stationary vanes, and an internal recycle pump with rotating impeller vanes.

Silencers comprising different types of vanes for sound reduction are also mentioned in, for instance, RU patent No. 2113600 and SU patent application No. 1719671. The use of conical swirl generators for creating a rotational movement of the gas has been stated as having a sound dampening effect.

Various other processes and devices utilising equipment without wings, vanes etc are also described in the literature, see for instance, WO patent application No. 9701387. This document describes the reaction of a reducing agent with exhaust fumes in consecutive longitudinal channels and with flow in opposite directions. EP patent application No. 0894523 describes a static mixer with mixing elements which vortex the fluid flowing through the mixer. DE patent application No. 4203807 also describes yet another type of mixing device.

FR patent application No. 2226865 discloses a silencer having a casing into which gas enters tangentially. In the centre of the casing is placed a cylindrical member made of perforated metal onto which vanes in the form of semicircular plates are attached. The semicircular plates are parallel to the ends of the cylindrical member and separated axially by flat radial strips. The gas thereby travels in a helical path between the inlet and the outlet of the silencer.

Conventional processes such as those mentioned above do not include any design that exhibits both a homogeneous flow profile and limited pressure changes.

### SUMMARY OF THE INVENTION

It is therefore an objective of the invention to provide a process and a device for gas distribution.

It is a further objective of the invention to provide a method and device for gas distribution, which ensures a minimal pressure drop across the device.

Yet another objective of the invention is to provide a method and a device for gas distribution ensuring homogeneous flow of the gas.

The above objectives are achieved by the invention, which provides method for the distribution of gas comprising transferring the gas into a swirl chamber (1) through an inlet section (2) positioned tangentially to the swirl chamber (1), stopping the swirling motion of the gas in the swirl chamber (1) by passage through an element consisting of a number of equally displaced bent vanes (4), the surface of the upstream part of the vanes (4) lying in a plane perpendicular to the swirl chamber's axis, the downstream part of the vanes (4) being parallel to the swirl chamber's axis, the vanes (4) extending radially outwards, and passing the gas through an outlet section (3) positioned downstream the swirl chamber (1), characterised in that the element is stationary and propeller-like with the vanes (4) attached to an axis at one end, each vane (4) being built up of a plate bent in at least two positions forming two or more bends defining angles, thereby diverting the gas direction through an angle of 90 degrees.

The invention further provides a gas distributing device being useful in the application of the above gas distributing method.

The gas distributing device according to the invention comprises a swirl chamber (1) with an inlet and an outlet section (2) and (3), the inlet section (2) positioned tangentially to the swirl chamber (1), and the outlet section (3) positioned downstream the swirl chamber (1), the swirl chamber (1) containing an element consisting of a number of equally displaced, bent vanes (4), the surface of the upstream part of the vanes (4) lying in a plane perpendicular to the swirl chamber's axis, the downstream part of the vanes (4) being parallel to the swirl chamber's (1) axis, the vanes (4) extending radially outwards, characterised in that the element is stationary and propeller-like with the vanes (4) attached to an axis at one end, each vane (4) being built up of a plate bent in at least two positions thereby forming two or more bends defining angles.

The gas distributing device can be used in connection with internal combustion engines for distributing exhaust gas into silencer-catalyst systems. It can also be used for gas distribution in other types of systems, where limited pressure changes are a requirement for the effective functioning of the system.

### BRIEF DESCRIPTION OF THE DRAWINGS

Fig. 1 shows a schematic diagram of the gas distribution device.
Fig. 2 shows a transverse section through the plates of the gas distributing device.
Fig. 3 shows a schematic diagram of a typical vane from the swirl chamber.

### DETAILED DESCRIPTION OF THE INVENTION

With the method and device of the invention, the direction of a gas flowing at a high speed of, for instance, 100 m/s, can be turned 90 degrees. Simultaneously, it is possible to equally distribute the gas over an outlet surface area 10-20 times larger than the inlet surface area. The device of the invention is useful for controlling pressure loss and a minimal drop in pressure is observed. The reduced pressure drop observed is attributed to the establishment of a homogeneous gas flow after passage through the gas distribution device.

In the case where the gas distributing device is to be used in a silencer, the dimension in the device's axial direction is restricted to a maximum of 2.5 times the inlet pipe's diameter. This restriction is purely due to the minimal space available in the silencer and a gas distributing device that is too large will not fit into the silencer. When the device is to be placed in a silencer, the device can be placed approximately 100 mm upstream the catalyst bed.

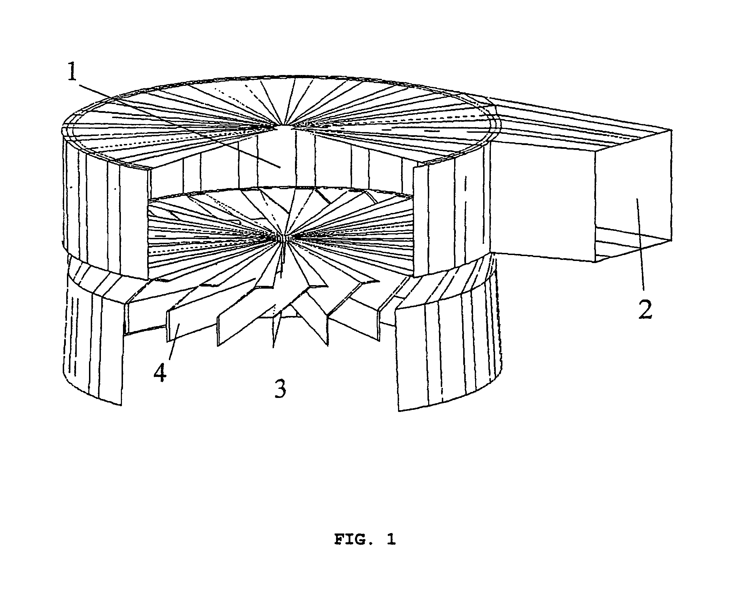

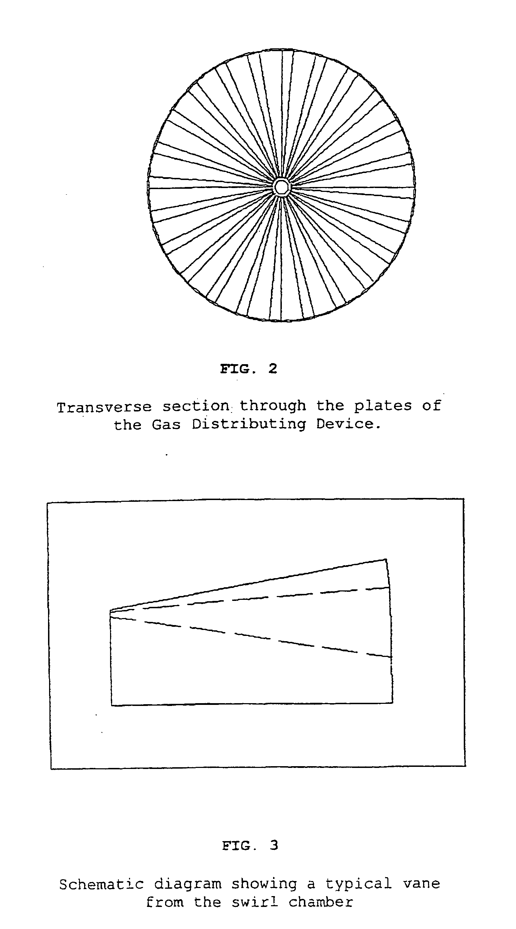

The gas distributing device according to the invention is illustrated in Fig. 1 and it consists of a swirl chamber (1) with inlet (2) and outlet sections (3). The cylindrical inlet section is positioned in such a way that the gas enters the swirl chamber tangentially. The swirl chamber contains a stationary, propeller-like element with a number of equally displaced, bent vanes (4), see Fig. 2.

The surface of the upstream part of the vanes lies in a plane perpendicular to the swirl chamber's axis. The downstream parts of the vanes are parallel to the swirl chamber's axis, and the vanes extend radially outwards.

The gas entering the swirl chamber is initially in contact with the surface of the upstream part of the vanes. It is thereafter distributed through the vanes and then enters the downstream part of the vanes, which is parallel to the swirl chamber's axis. The gas direction is thus diverted 90 degrees.

When the redirected gas is downstream the swirling chamber, it encounters the catalyst in the silencer. The catalyst acts as a flow restrictor and a pressure drop of approximately 1/3 inlet pipe velocity heads occurs here.

The relative skewness as applied in this invention is defined as the deviation/(mean value) ratio, where both values are calculated on the axial gas velocity component with the surface area through which the gas is distributed acting as a weight function.

Each vane in the swirl chamber is built up of a plate bent in at least two positions. The plate can be bent at angles of, for instance, 40 and 50 degrees respectively, see Fig. 3. The plates are attached to an axis at one end and they extend radially outwards as shown in Fig. 2.

The plates can also be bent at other angles, and they can also have more than two bends. An embodiment of the invention is a device with a vane with several bends, such that the plate has a curved surface between the upstream and the downstream surfaces.

The following examples illustrate the method and device of the invention.

The pressure as given in the examples is measured in velocity head units, which is the dynamic pressure of the gas in the inlet of the different sections.

### Example

The outlet section of the gas distributor device according to the invention is placed 100 mm from the catalyst in a catalyst-silencer unit of an internal combustion engine. The pressure drop after passage through the gas distributor device and before and after passage through the catalyst bed were measured.

| | |
|---|---|
| Pressure drop after passage through the gas distributor of the invention and at the surface of the catalyst bed | 0.8 velocity heads |
| | |
| Pressure drop in the catalyst bed | 0.35 velocity heads |
| | |
| Skewness at the inlet to the catalyst bed | < 10% |

A skewness value of less than 10% indicates that the gas is well distributed across the surface of the catalyst bed.

### Comparative Example

A similar experiment was conducted using a conventional gas distributor with a tangential inlet. The results in this case were:

| | |
|---|---|
| Pressure drop after passage through the conventional distributor and at the surface of the catalyst: | 2.64 velocity heads |
| | |
| Pressure drop in the catalyst | 0.34 velocity heads |
| | |
| Skewness at the inlet to the catalyst bed | > 50% |

After catalytic reaction of the exhaust gas, it was observed that a lower conversion in the catalyst was obtained. This was due to the poorer gas flow distribution on entering the catalyst bed.

## Claims

1. Method for the distribution of gas comprising transferring the gas into a swirl chamber (1) through an inlet section (2) positioned tangentially to the swirl chamber (1), stopping the swirling motion of the gas in the swirl chamber (1) by passage through an element consisting of a number of equally displaced bent vanes (4), the surface of the upstream part of the vanes (4) lying in a plane perpendicular to the swirl chamber's axis, the downstream part of the vanes (4) being parallel to the swirl chamber's axis, the vanes (4) extending radially outwards and passing the gas through an outlet section (3) positioned downstream the swirl chamber (1), **characterised in that** the element is stationary and propeller-like with the vanes (4) attached to an axis at one end, each vane (4) being built up of a plate bent in at least two positions forming two or more bends defining angles, thereby diverting the gas direction through an angle of 90 degrees.

2. Gas distributing device for use in the gas distribution method of claim 1, comprising a swirl chamber (1) with an inlet and an outlet section (2) and (3), the inlet section (2) positioned tangentially to the swirl chamber (1), and the outlet section (3) positioned downstream the swirl chamber (1), the swirl chamber (1) containing an element consisting of a number of equally displaced, bent vanes (4), the surface of the upstream part of the vanes (4) lying in a plane perpendicular to the swirl chamber's axis, the downstream part of the vanes (4) being parallel to the swirl chamber's (1) axis, the vanes (4) extending radially outwards, **characterised in that** the element is stationary and propeller-like with the vanes (4) attached to an axis at one end, each vane (4) being built up of a plate bent in at least two positions thereby forming two or more bends defining angles.

3. Gas distributing device according to claim 2 comprising the dimension in the axial direction of the device being a maximum of 2.5 times the inlet pipe's diameter.

4. Gas distributing device according to claim 2 comprising a swirl chamber (1) with vanes (4) bent at an angle of 40 and 50 degrees, respectively.

5. Gas distributing device according to claim 2 comprising a swirl chamber (1) with vanes (4) bent to form a curvature in the section between the surface of the upstream part of the vanes (4) and the downstream part of the vanes (4).

6. Silencer-catalyst system for an internal combustion engine comprising a gas distributing device according to claims 2-5.

## Patentansprüche

1. Verfahren zur Verteilung von Gas, das umfasst: Übertragen des Gases in eine Wirbelkammer (1) durch einen Einlassabschnitt (2), der tangential zur Wirbelkammer (1) angeordnet ist, und Anhalten der Wirbelbewegung des Gases in der Wirbelkammer (1) mit Hilfe eines Durchtritts durch ein Element bestehend aus einer Anzahl von gleich beabstandeten Schaufeln (4), wobei die Fläche des stromauf gelegenen Teils der Schaufeln (4) in einer zur Achse der Wirbelkammerachse senkrechten Ebene liegt, wobei der stromab gelegene Teil der Schaufeln (4) parallel zur Wirbelkammerachse ist und wobei sich die Schaufeln (4) radial nach außen erstrecken und das Gas durch einen Auslassabschnitt leiten, der stromab der Wirbelkammer (1) angeordnet ist, **dadurch gekennzeichnet, dass** das Element feststeht und propellerartig ausgebildet ist, wobei die Schaufeln (4) an einem Ende an einer Achse befestigt sind und jede Schaufel (4) durch eine Platte gebildet ist, die an wenigstens zwei Stellen unter Bildung von zwei oder mehreren, Winkel bildenden Biegungen umgebogen ist, wodurch die Gasrichtung um einen Winkel von 90 Grad abgelenkt wird.

2. Gasverteilungsvorrichtung zur Verwendung bei dem Gasverteilungsverfahren nach Anspruch 1, die eine Wirbelkammer (1) mit einem Einlassabschnitt (2) und einem Auslassabschnitt (3) umfasst, wobei der Einlassabschnitt (2) tangential zur Wirbelkammer (1) und der Auslassabschnitt (3) stromab der Wirbelkammer (1) angeordnet sind, wobei die Wirbelkammer (1) ein Element enthält, das aus einer Anzahl von gleichmäßig versetzten, umgebogenen Schaufeln (4) besteht, wobei die Fläche des stromauf gelegenen Teils der Schaufeln (4) in einer zur Wirbelkammerachse senkrechten Ebene liegt, wobei der stromab gelegene Teil der Schaufeln (4) parallel zur Wirbelkammerachse ist und wobei sich die Schaufeln (4) radial nach außen erstrecken, **dadurch gekennzeichnet, dass** das Element fest steht und propellerartig ausgebildet ist, wobei die Schaufeln (4) an einem Ende an einer Achse befestigt sind und jede Schaufel (4) durch eine Platte gebildet ist, die an wenigstens zwei Stellen umgebogen ist, wodurch zwei oder mehrere, Winkel bildende Biegungen gebildet werden.

3. Gasverteilungsvorrichtung nach Anspruch 2, **dadurch gekennzeichnet, dass** die Abmessungen in axialer Richtung der Vorrichtung maximal das 2,5-fache des Durchmessers des Einlassrohrs beträgt.

4. Gasverteilungsvorrichtung nach Anspruch 2, **gekennzeichnet durch** eine Wirbelkammer (1) mit Schaufeln (4), die unter einem Winkel von 40 bzw. 50 Grad umgebogen sind.

5. Gasverteilungsvorrichtung nach Anspruch 2, **gekennzeichnet durch** eine Wirbelkammer (1) mit Schaufeln (4), die gebogen sind zur Bildung einer Krümmung im Abschnitt zwischen der Fläche des stromauf gelegenen Teils der Schaufeln (4) und des stromab gelegenen Teils der Schaufeln (4).

6. Schalldämpfer-Katalysatorsystem für eine Brennkraftmaschine, **gekennzeichnet durch** eine Gasverteilungsvorrichtung nach Anspruch 2 bis 5.

## Revendications

1. Procédé pour la distribution d'un gaz comprenant les étapes consistant à transférer le gaz dans une chambre de turbulence (1) par l'intermédiaire d'une section d'entrée (2) placée tangentiellement à la chambre de turbulence (1), arrêter le mouvement de turbulence du gaz dans la chambre de turbulence (1) au moyen d'un passage à travers un élément constitué de plusieurs ailettes pliées (4) placées à égale distance, la surface de la partie amont des ailettes (4) s'étendant dans un plan perpendiculaire à l'axe de la chambre de turbulence, la partie aval des ailettes (4) étant parallèle à l'axe de la chambre de turbulence, les ailettes (4) s'étendant radialement vers l'extérieur et faisant passer le gaz à travers une section de sortie (3) placée en aval de la chambre de turbulence (1), **caractérisé en ce que** l'élément est stationnaire et analogue à une hélice, les ailettes (4) étant fixées à un axe à une extrémité, chaque ailette (4) étant formée d'une plaque pliée en au moins deux positions, formant deux pliures ou plus définissant des angles, détournant ainsi la direction du gaz selon un angle de 90 degrés.

2. Dispositif pour la distribution de gaz pour une utilisation dans le procédé de distribution de gaz de la revendication 1, comprenant une chambre de turbulence (1) avec des sections d'entrée et de sortie (2) et (3), la section d'entrée (2) étant placée tangentiellement à la chambre de turbulence (1) et la section de sortie (3) étant placée en aval de la chambre de turbulence (1), la chambre de turbulence (1) contenant un élément constitué d'un certain nombre d'ailettes pliées (4) placées à égale distance, la surface de la partie amont des ailettes (4) s'étendant dans un plan perpendiculaire à l'axe de la chambre de turbulence, la partie aval des ailettes (4) étant parallèle à l'axe de la chambre de turbulence (1), les ailettes (4) s'étendant radialement vers l'extérieur, **caractérisé en ce que** l'élément est stationnaire et analogue à une hélice, les ailettes (4) étant fixées à un axe à une extrémité, chaque ailette (4) étant formée d'une plaque pliée en au moins deux positions, formant ainsi deux pliures ou plus définissant des angles.

3. Dispositif de distribution de gaz selon la revendication 2, la dimension du dispositif en direction axiale étant au moins 2,5 fois supérieure au diamètre du tuyau d'entrée.

4. Dispositif de distribution de gaz selon la revendication 2, comprenant une chambre de turbulence (1) comportant des ailettes (4) pliées respectivement selon un angle de 40 degrés et 50 degrés.

5. Dispositif de distribution de gaz selon la revendication 2, comprenant une chambre de turbulence (2) avec des ailettes (4) pliées pour former une courbure dans la section comprise entre la surface de la partie amont des ailettes (4) et la partie aval des ailettes (4).

6. Système de silencieux catalytique pour un moteur à combustion interne comprenant un dispositif de distribution de gaz selon les revendications 2 à 5.
